**Europäisches Patentamt**

**European Patent Office**

**Office européen des brevets**

(11) Veröffentlichungsnummer : **0 391 208 B1**

(12) **EUROPÄISCHE PATENTSCHRIFT**

(45) Veröffentlichungstag der Patentschrift :
**19.11.92 Patentblatt 92/47**

(21) Anmeldenummer : **90105780.2**

(22) Anmeldetag : **27.03.90**

(51) Int. Cl.⁵ : **F26B 5/06,** F26B 25/00,
B65G 65/00

(30) Priorität : **07.04.89 EP 89106102**

(43) Veröffentlichungstag der Anmeldung :
**10.10.90 Patentblatt 90/41**

(45) Bekanntmachung des Hinweises auf die
Patenterteilung :
**19.11.92 Patentblatt 92/47**

(84) Benannte Vertragsstaaten :
**BE CH DE ES FR GB IT LI NL SE**

(56) Entgegenhaltungen :
**EP-A- 0 099 834**
**DE-A- 3 320 848**
**DE-C- 133 365**
**DE-C- 252 989**
**FR-A- 2 297 787**
**FR-A- 2 340 883**

(54) **Gefriertrocknungseinrichtung.**

(56) Entgegenhaltungen :
**FR-A- 2 405 020**
**GB-A- 2 121 152**
**GB-A- 2 185 969**
**LU-A- 49 281**
**US-A- 2 089 068**

(73) Patentinhaber : **FINN-AQUA**
**SANTASALO-SOHLBERG GmbH**
**Kalscheurener Strasse 92**
**W-5030 Hürth (DE)**

(72) Erfinder : **Hemmersbach, Siegfried**
**Max-Liebermann-Strasse 13**
**W-5000 Köln 50 (DE)**
Erfinder : **May, Heinz**
**Am Römerpfad 32**
**W-5014 Pulheim (DE)**

(74) Vertreter : **Leineweber, Jürgen, Dipl.-Phys.**
**Nagelschmiedshütte 8**
**W-5000 Köln 40 (DE)**

**Beschreibung**

Die Erfindung bezieht sich auf eine Gefriertrocknungseinrichtung mit den Merkmalen des Oberbegriffs des Anspruchs 1.

Die Gefriertrocknung wird in erster Linie zur Konservierung temperaturempfindlicher Produkte eingesetzt, deren Eigenschaften erhalten bleiben sollen. In den Bereichen Pharmazie, Biologie und Medizin findet die Gefriertrocknung ihr Hauptanwendungsgebiet.

Der übliche Gefriertrocknungsprozeß läuft etwa folgendermaßen ab: Nach dem Einfrieren des wasserenthaltenden Produktes findet die Sublimation des in Eisform vorliegenden Wassers statt, und zwar unter Vakuum (etwa $10^{-1}$mbar). Nach dieser Haupttrocknung findet die Nachtrocknung statt, während der die adsorptiv gebundene Feuchtigkeit entfernt wird, um extrem niedrige Restfeuchten zu erzielen. Während der Nachtrocknung wird das Produkt unter Einhaltung zulässiger Temperaturgrenzen erwärmt. Der Druck, bei dem die Nachtrocknung stattfindet, liegt bei etwa $10^{-3}$mbar. Da die Gefriertrocknung im Chargenbetrieb durchgeführt wird, ist man bemüht, die Chargen möglichst groß zu wählen. Es ist inzwischen durchaus üblich, mit Chargen zu fahren, deren Wert über 1 Mio DM liegt. Der Verlust dieser Charge infolge von Verunreinigungen führt deshalb zu empfindlichen Schäden.

Verunreinigungen können während der Beladungsphase auftreten. Die Beladung wird in der Regel noch von Hand ausgeführt, d.h., die Vielzahl der Behälter mit dem zu trocknenden Produkt (bis zu 100.000 Fläschchen pro Charge) müssen von einer Abfüllstation zur Gefriertrocknungseinrichtung transportiert und von Hand auf den Stellflächen abgesetzt werden. Dieses kann mit Hilfe von Schalen geschehen, die während des Gefriertrocknungsprozesses in der Gefriertrocknungskammer verbleiben.

Die Beladephase hat unter extrem reinen Bedingungen stattzufinden, da die Behälter bzw. Flaschen mit dem zu gefriertrocknenden Produkt zunächst noch offen sind. Üblicherweise liegt der Öffnung der Behälter ein Stopfen auf, der eine Aussparung zur Abführung des Wasserdampfes aufweist. Nach der Durchführung des Gefriertrocknungsprozesses erfolgt das Verschließen der Stopfen bei einem bestimmten Druck, indem die Stellflächen zusammengefahren werden.

Aus der deutschen Gebrauchsmusterschrift 89 00 750 ist eine Gefriertrocknungseinrichtung mit den Merkmalen des Oberbegriffs des Patentanspruchs 1 bekannt. Bei dieser Einrichtung werden einer Beladestation gleichzeitig Transportrahmen und die Behälter mit dem zu gefriertrocknenden Produkt zugeführt. Auf der Beladestation werden Rahmen und Behälter zu Transport einheiten zusammengefügt und mit Hilfe eines Schlittens zum Gefriertrocknungsschrank transportiert. Eine Einrichtung dieser Art erfordert das Vorhandensein einer Vielzahl von Rahmen zur Bildung der beschriebenen Transporteinheiten. Diese Rahmen (bei größeren Anlagen hundert und mehr) müssen gelagert, vor dem Einsatz sterilisiert und über aufwendige Einrichtungen nicht nur zu- und abgeführt sondern auch noch be- und entladen werden. Schließlich müssen die Rahmen als Bestandteil der Transporteinheiten in die Gefriertrocknungskammern eingeschoben werden. Dort verbleiben sie auch während des Gefriertrocknungsprozesses. Die Notwendigkeit der Verwendung einer Vielzahl von Transportrahmen erfordert entsprechende Handlingseinrichtungen und zusätzlichen Sterilisationsaufwand. Es besteht die Gefahr, daß über die relativ großen Oberflächen der Transportrahmen Verunreinigungen - insbesondere schädliche Keime - in die Gefriertrocknungskammer gelangen, was zu einem Verlust der gesamten Charge führen würde. Schließlich nehmen die Transportrahmen, die sich während des Gefriertrocknungsprozesses in der Gefriertrocknungskammer befinden müssen, einen nicht unbeträchtlichen Raum ein.

Aus der GB-A-21 85 969 ist eine Vorrichtung zum Beschicken und Entladen einer Gefriertrocknungseinrichtung bekannt. Bei dieser Vorrichtung werden die kontinuierlich auf einem Förderband angelieferten Behälter nacheinander auf Transferbleche aufgesetzt, die mehrfach nacheinander in die Gefriertrocknungseinrichtung eingefahren werden. Bei jedem Einfahren wird eine relativ kleine Menge von Behältern in die Kammer der Gefriertrocknungseinrichtung eingebracht. Eine relativ schnelle Beladung der Gefriertrocknungseinrichtung ist damit nicht möglich. Außerdem besteht der wesentliche Nachteil, daß Reibungserscheinungen zwischen den Transferblechen und den Oberseiten der Stellflächen unvermeidbar sind. Der Grund dafür liegt darin, daß die Transferbleche den Stellflächen aufliegen müssen, um ein Stürzen der Behälter beim Übergang vom Transferblech auf die Stellfläche (und umgekehrt beim Entladevorgang) zu vermeiden. Die Reibungserscheinungen führen zu einem Abrieb, der eine Verunreinigung der kostspieligen Chargen zur Folge hat.

Der vorliegenden Erfindung liegt die Aufgabe zugrunde, das Handling der Vielzahl von Behältern zu vereinfachen und zu beschleunigen, und zwar insbesondere unter dem Gesichtspunkt der Reduzierung der Gefahr von Verunreinigungen während der Beladephase.

Erfindungsgemäß wird diese Aufgabe durch die kennzeichnenden Merkmale des Patentanspruchs 1 gelöst. Bei einer Einrichtung dieser Art erfolgt die Beschickung in der Weise, daß die Behälter zunächst auf den Transfertisch aufgesetzt werden, daß der Transfertisch an die Stellfläche angefahren wird, daß die Behälter mit Hilfe des relativ zum Transfertisch bewegbaren Rahmens auf die Stellfläche geschoben werden und daß der Rahmen vor der Durchführung des Gefriertrocknungsprozesses zurückgezogen wird. Diese Verfahrensschritte werden in umgekehrter Reihenfolge ausgeführt, wenn die Gefriertrocknungseinrichtung nach der Durchführung des Gefriertrocknungsprozesses entladen werden soll. Der wesentliche Vorteil dieser Maßnahmen liegt zunächst darin, daß die Zeit, die notwendig ist, um eine Stellfläche mit der Vielzahl von Behältern zu füllen, im Vergleich zum Stand der Technik wesentlich reduziert ist.

Weiterhin ist es vorteilhaft, daß die Maßnahmen nach der Erfindung, die einen ersten Schritt in Richtung der Automatisierung der Beschickung und Entladung von Gefriertrocknungseinrichtungen darstellen, nicht mit der Notwendigkeit verbunden sind, zusätzliche Rahmen oder Schalen in der Gefriertrocknungseinrichtung unterbringen zu müssen. Diese würden den Ablauf des Gefriertrocknungsprozesses verzögern, da sie die Wärme- bzw. Kälteübertragung von den Stellplatten auf das Produkt beeinträchtigen würden. Ein Transfertisch der erfindungsgemäßen Art erlaubt es, eine Vielzahl der bisher von Hand ausgeführten Schritte während der Beschickungs- und Entladungsphasen zu automatisieren. Zum einen können dadurch die Beschickung und die Entladung wesentlich schneller durchgeführt werden; zum anderen kann weitgehend oder sogar vollständig auf die Anwesenheit von Personal im Reinraumgebiet verzichtet werden, so daß die Gefahr von Verünreinigungen in erheblichem Maße reduziert ist.

Zweckmäßig ist es, die Behälter mit dem zu gefriertrocknenden Produkt zunächst auf einem Formatiertisch von der Größe des Transfertisches zu sammeln und dann sämtliche Behälter gemeinsam auf den Transfertisch zu schieben. Dieses kann ebenfalls mit Hilfe des relativ zum Transfertisch bewegbaren Rahmens geschehen.Dieser Rahmen ist auch dann einsetzbar, wenn die geschlossenen Behälter nach der Durchführung des Gefriertrocknungsprozesses vom Transfertisch einem Transportsystem zugeführt werden sollen.

Um die auftretenden Reibungen während des Verschiebens der Vielzahl der Behälter zu minimieren, kann es zweckmäßig sein, Formatiertisch und Transfertisch mit Kunststoffbeschichtungen auszurüsten. Eine weitere vorteilhafte Maßnahme zur Reduzierung der Reibung besteht darin, die Stellflächen während des Beschickens und Entladens auf einer Temperatur zu halten, die etwas unter dem Gefrierpunkt liegt. Dadurch bildet sich aufgrund der kondensierenden Luftfeuchtigkeit eine dünne Eisschicht aus, die ein nahezu reibungsfreies Überführen der Vielzahl von Behältern erlaubt.

Weitere Vorteile und Einzelheiten der Erfindung sollen anhand von in den Figuren 1 bis 10 schematisch dargestellten Ausführungsbeispielen erläutert werden. Es zeigen:

- Figur 1 einen Teilschnitt durch eine Gefriertrocknungseinrichtung mit einem davor befindlichen Transfertisch,
- Figur 2 vergrößert den übergangsbereich zwischen Transfertisch und Stellefläche nach Figur 1,
- Figur 3 eine Draufsicht auf einen Transfertisch und einen zugehörigen Formatiertisch,
- Figuren 4a, b, c, Skizzen, die die Zuführung der Behälter zum Formatiertisch erkennen lassen,
- Figuren 5a, b, c, d Skizzen, die die Übernahme der Behälter vom Formatiertisch auf den Transfertisch erkennen lassen,
- Figuren 6a, b, c Skizzen, die einen Entladevorgang erkennen lassen,
- Figur 7 eine Draufsicht auf den Transfertisch und auf ein Transportsystem zum Abtransport der geschlossenen Behälter nach der Durchführung der Gefriertrocknung,
- Figur 8 eine Einrichtung mit einer Mehrzahl von Transfertischen,
- Figur 9 nochmals vergrößert den Übergangsbereich zwischen Transfertisch und Stellfläche nach Figur 1 und
- Figur 10 eine weitere Ausführungsform für ein Transportsystem, das sowohl für die Zuführung als auch für den Abtransport der Behälter geeignet ist.

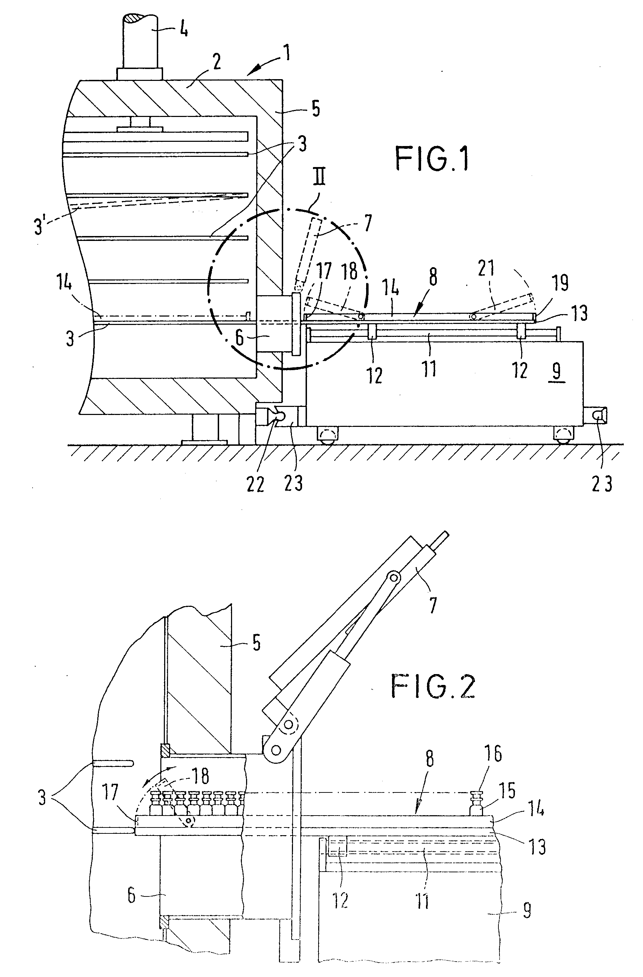

In Figur 1 ist die Gefriertrocknungseinrichtung mit 1 bezeichnet. Sie umfaßt eine Kammer 2, in der sich die Stellflächen 3 befinden. Mit Hilfe einer im einzelnen nicht näher dargestellten Zylinderkolbeneinrichtung 4 sind die Stellflächen 3 in Bezug auf ihre Höhe einstellbar. Diese Höheneinstellung erlaubt es zum einen, die einzelnen Stellflächen 3 auf eine bestimmte Ladehöhe einzustellen. Zum anderen können die Stellflächen mit Hilfe der Zylinderkolbeneinrichtung 4 nach der Durchführung der Gefriertrocknung zusammengeschoben wrden, um die Behälter zu schließen.

Eine Wand 5 der Kammer 2 ist mit einer Öffnung 6 ausgerüstet, die mittels der Klappe 7 verschließbar ist. In Höhe der Öffnung 6 befindet sich vor der Gefriertrocknungseinrichtung 1 der Transfertisch 8, der sich auf dem Chargierwagen 9 über die horizontale Spindel 11 und die Spindelmuttern 12 abstützt. Der Transfertisch 8 umfaßt die eigentliche Tischfläche 13 und den Rahmen 14, der seinerseits in im einzelnen nicht näher dargestellter Weise relativ zur Tischfläche 13 verschiebbar angeordnet ist.

In Figur 2 ist der Bereich der Öffnung 6 in der Kammerwand 5 vergrößert dargestellt. Die Spindelführung 11, 12 ist derart ausgebildet, daß der Transfertisch 8 an die zu beschickende Stellfläche 3 derart angefahren werden kann, daß die Oberflächen der jeweiligen Stellflächen 3 und der Tischfläche 13 des Transfertisches 8 eine Ebene bilden. Der Rahmen 14, der die auf dem Transfertisch 8 stehenden Behälter 15 mit den noch lose aufliegenden Stopfen 16 umfaßt, kann bis in den Innenraum der Gefriertrocknungskammer 1 eingeschoben werden (vgl. Figur 1, in der der eingeschobene Rahmen 14 gestrichelt dargestellt ist). Der in der Position nach Figur 1 der Öffnung 6 in der Kammerwand 5 zugewandte Rand 17 des Rahmens 14 kann mit Hilfe von Seitenarmen 18 angehoben werden (vgl. die jeweils gestrichelten Positionen). Nach dem vollständigen Einfahren des Rahmens 14 in die Kammer 2 erfolgt zunächst das gestrichelt dargestellte Anheben des Rahmenrandes 17 und danach das Zurückziehen des Rahmens 14. Die Behälter 15 bleiben auf der Stellfläche 3 stehen. Danach kann die Beschickung der nächsten Stellfläche eingeleitet werden oder, wenn die letzte Stellfläche gefüllt wurde, das Schließen der Klappe 7 erfolgen und mit dem Gefriertrocknungsprozeß begonnen werden.

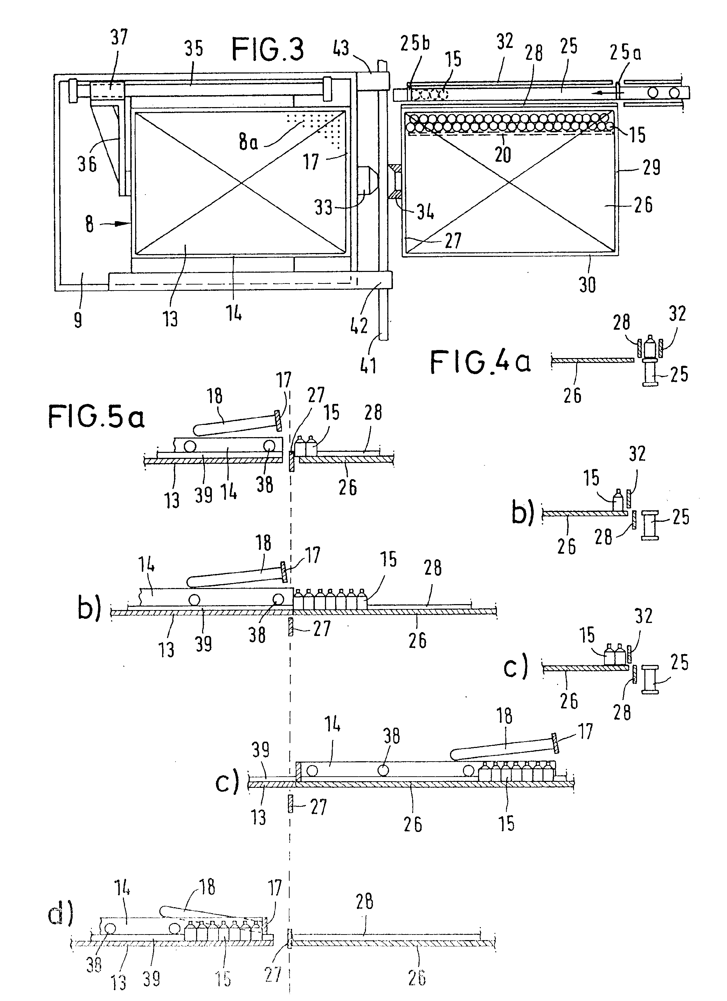

Um eine weitere Stellfäche 3 beschicken zu können, wird der Transfertisch erneut mit Behältern 15 gefüllt. Dieses kann - wie im einzelnen in den Figuren 3 bis 5 dargestellt - dadurch geschehen, daß der Chargierwagen 9 zu einem Formatiertisch gerollt wird, der in Figur 1 nicht dargestellt ist und beispielsweise der Öffnung 6 gegenüber angeordnet sein kann. Der Transfertisch 8 wird an den Formatiertisch angefahren. Um mit Hilfe des Rahmens 14 die Flaschen auf dem Formatiertisch umfassen zu können, ist auch der dem Rand 17 gegenüberliegende Rand 19 des Rahmens 14 mit Hilfe von Seitenarmen 21 anhebbar. Mit angehobenem Rand 19 erfolgt die Verschiebung des Randes 14. Umfaßt der Rahmen 14 sämtliche Behälter des Formatiertisches, wird der Rand 19 abgesenkt und der Rahmen 14 zurückgezogen, so daß sämtliche Behälter auf den Transfertisch 8 geschoben werden.

Bei der in den Figuren 1 und 2 dargestellten Vorrichtungen befinden sich die zu beschickende oder zu entladende Stellfläche 3, die Tischfläche 13 des Transfertisches 8 und der nicht dargestellte Formatiertisch auf gleicher Höhe. Die korrekte Position des Chargierwagens vor der Gefriertrocknungseinrichtung 1 und gegebenenfalls auch vor dem Formatiertisch wird durch Zentrierbolzen 22 und Führungen 23 für diese Bolzen sichergestellt. Es besteht natürlich auch die Möglichkeit, die Höhe des Transfertisches 8 einzustellen, wenn unterschiedlich hohe Stellflächen 3 beladen werden müssen. Der Totraum in der Gefriertrocknungskammer kann dadurch klein gehalten werden. Die Öffnung 6 muß entsprechend groß ausgebildet sein. Weiterhin besteht die Möglichkeit, den Transfertisch 8 zusätzlich drehbar auf dem Chargierwagen 9 abzustützen. Es reicht dann aus, wenn nur einer der Ränder 17, 19 des Rahmens 14 anhebbar ausgebildet ist, da jeweils der anhebbare Rand dem Formatiertisch bzw. der zu beschickenden oder zu entladenden Stellfläche 3 zugewandt werden kann.

Figur 3 zeigt eine Draufsicht auf den Transfertisch 8 mit seinem Chargierwagen 9 und eine Formatiervorrichtung. Dem Formatiertisch ist das der Zuführung und/oder auch der Abführung der Flaschen dienende Band 25 zugeordnet, das sich seitlich neben dem Formatiertisch 26 oder auch an seiner Stirnseite erstreckt. Der Formatiersich 26 weist die Ränder 27 bis 30 auf, von denen die Abschnitte 27 und 28 absenkbar sind. Der Randabschnitt 28 dient ebenfalls der Führung der Behälter 15 auf dem Band 25. Weiterhin ist eine äußere Führung 32 vorgesehen, die seitlich in Richtung des Formatiertisches 26 verschiebbar ist. Schließlich ist das Transportband 25 noch mit einer Einlaufsperre 25a und einem Anschlag 25b ausgerüstet.

Die Beschickung des Formatiertisches 26 erfolgt in der Weise, daß zunächst eine Reihe von Behältern 15 auf dem Band 25 auf Einschublänge vor dem Anschlag 25b gestaut werden (Figur 4a). Eine nicht dargestellte "Vollmeldungs"-Kontrolle betätigt die Einlaufsperre 25a und setzt - falls erforderlich - das Band 25 still. Der Rand 28 wird abgesenkt, so daß mittels der Führung 32 eine Reihe der Flaschen 15 auf den Formatiertisch 26 geschoben werden kann (Figur 4b). Danach werden die Führung 32 zurückbewegt und der Rand 28 angehoben, so daß eine weitere Reihe von Behältern 15 auf dem Band 25 gestaut werden kann. Nach dem Stillstand des Bandes schließt sich wieder die Einlaufsperre 25a und der Rand 28 wird abgesenkt. Die zweite Reihe kann dann mit Hilfe der Führung 28 auf den Formatiertisch 26 geschoben werden (Figur 4c). Die Entladung des Formatiertisches erfolgt in umgekehrter Weise.

Der Anschlag 25b ist in Richtung des Bandes 25 verstellbar. Dadurch ist es möglich, die Flaschenreihen jeweils um einen halben Durchmesser der Flaschen versetzt anzuhalten. Eine optimale Verteilung der Flaschen 15 auf dem Formatiertisch 26 ist dadurch möglich. Gestrichelt dargestellt ist auf dem Formatiertisch 26 eine Stauschiene 20. Diese stützt die vordere Reihe der Flaschen bzw. Behälter 15, so daß ein Kippen verhindert ist. Die Tischfläche 13 des Transfertisches 8 ist zweckmäßig mit einer Vielzahl von Bohrungen 8a ausgerüstet, die gegenüber dem Durchmesser der Behälter 15 sehr klein sind und deren Verschiebung nicht beeinträchtigen. Diese Öffnungen ermöglichen es, einen extrem reinen Gasstrom, vorzugsweise Inertgasstrom oberhalb der noch offenen Behälter 15 aufrechtzuerhalten. Dazu wird der Transferwagen mittels einer Haube abgedeckt, in die das reine Gas dosiert eingelassen wird. Durch die Öffnungen 8a in der Tischfläche 13 strömen diese Gase ab.

Nach der vollständigen Besetzung des Formatiertisches 26 mit Behältern 15 wird zunächst der Rand 27 abgesenkt und der Transfertisch 8 mit seiner Tischfläche 13 an den Formatiertisch 26 angefahren (vgl. Figuren 5a und 5b). Bolzen 33 und Bolzenführung 34 (Figur 3) sichern eine korrekte Position. Anschließend wird der Rahmen 14 mit angehobenem Rand 17 auf den Formatiertisch 26 gefahren, und zwar so weit, bis der Rahmen 14 sämtliche Behälter 15 umfaßt. Nach dem Absenken des Randes 17 wird der Rahmen 14 auf den Transfertisch 13 zurückgezogen, so daß sämtliche Behälter 15 auf den Transfertisch 13 geschoben werden (Figur 5d).

Die Bewegung des Rahmens 14 erfolgt ebenfalls mit einer Spindelführung 35, die in Figur 3 dargestellt ist und seitlich neben dem Transfertisch 8 angeordnet ist. Über den Winkel 36 und die Spindelmutter 37 ist der Rahmen 14 auf der Spindel geführt. Der Rahmen 14 seinerseits ist mit Rollen 38 (Figuren 5a bis 5d) ausgerüstet. Diese stützen sich auf Rändern 39 des Transfertisches 13 ab, welche damit gleichzeitig Laufschienen für die Rollen 38 bilden. Die Fortsetzung dieser Laufschienen im Bereich des Formatiertisches 26 bilden die Ränder 28 und 30.

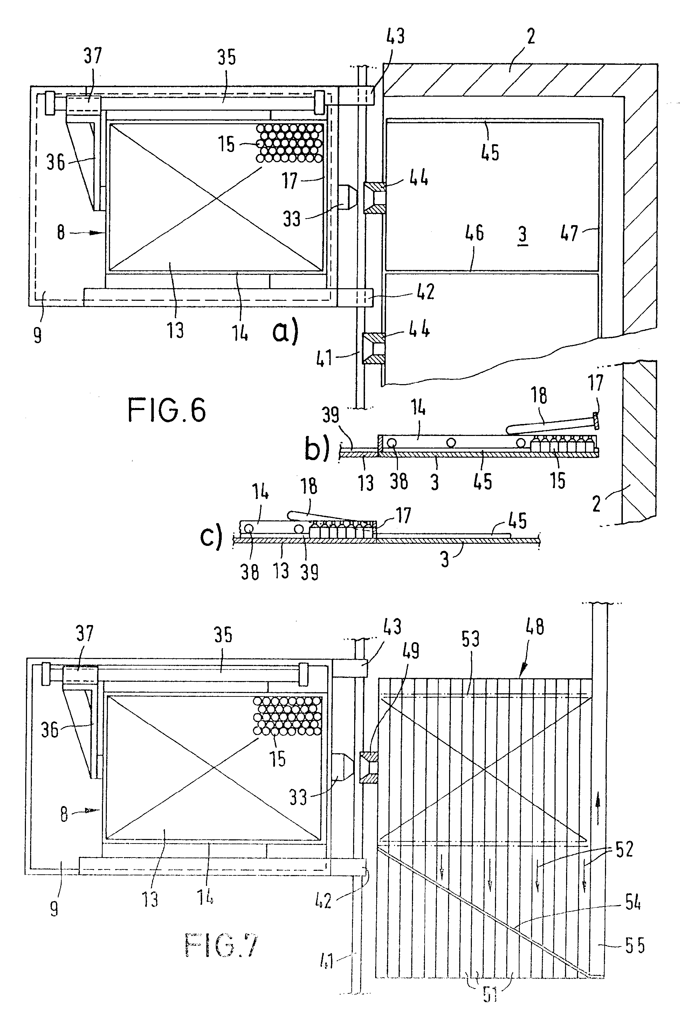

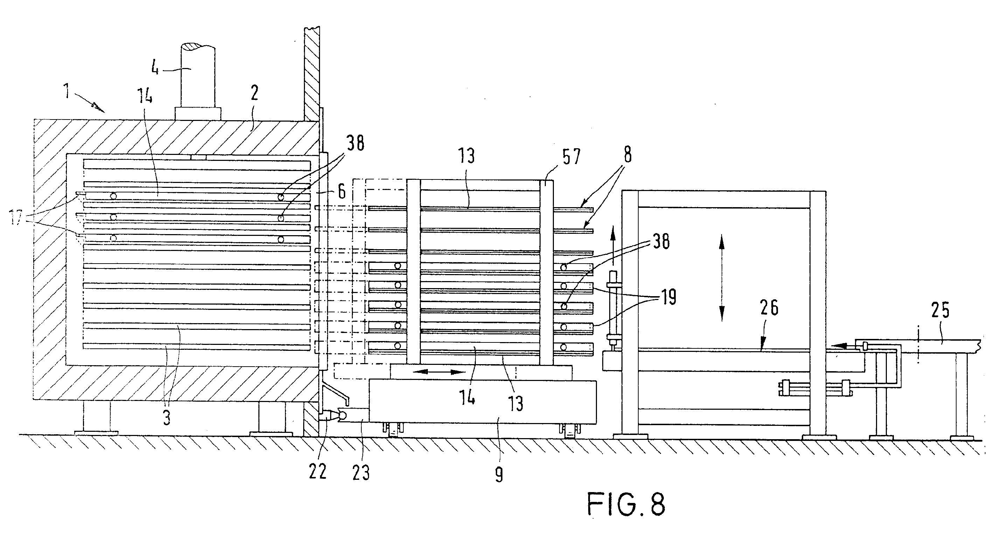

Zwischen der Formatiervorrichtung und dem Chargierwagen 9 ist eine Führungsstange 41 vorgesehen, die von Ösen 42 und 43 am Chargierwagen 9 umfaßt wird. Eine exakte seitliche Führung des Chargierwagens 9 ist dadurch möglich. Eine derartige Führung ist dann sinnvoll, wenn die Formatiervorrichtung, die Gefriertrocknungseinrichtung 1 und auch das System zum Abtransport der gefüllten Behälter 15 nebeneinander angeordnet sind. In dieser Beziehung korrespondiert Figur 3 mit den Ausführungsbeispielen nach den Figuren 6 und 7. Es ist natürlich auch möglich, Formatiervorrichtung und ein dem Abtransport der Behälter dienendes System der Öffnung 6 der Gefriertrocknungseinrichtung (oder mehreren nebeneinanderstehenden Gefriertrocknungseinrichtung) gegenüber aufzustellen.

Die Figuren 6a, b, c zeigen den Chargierwagen 9 mit dem Transfertisch 8 vor der geöffneten Gefriertrocknungseinrichtung 1. Die Stellfläche 3 ist doppelt so groß wie die Tischfläche 13 des Transfertisches 8, so daß zur vollständigen Besetzung der Stellfläche 3 der Transfertisch 8 zweimal angefahren werden muß. Der Bolzen 33 und die Bolzenführungen 44 sichern wieder korrekte Positionen. Die Überführung der Behälter 15 von der Tischfläche 13 des Transfertisches 8 auf die Stellfläche 3 erfolgt in der bereits beschriebenen Weise. Der Rahmen 14 wird zusammen mit den Behältern 15 in die Gefriertrocknungskammer bewegt (Figur 6b). Nach dem Anheben des Randes 17 wird der Rahmen 14 zurückgezogen, so daß die Behälter 15 auf der Stellfläche 3 verbleiben. Das Entladen der Stellfläche 3 erfolgt dadurch, daß diese Schritte in umgekehrter Reihenfolge durchgeführt werden (vgl. Figur 6c).

Die Stellfläche 3 ist mit Rändern 45, 46, 47 ausgerüstet, die zum einen ein Herabfallen der Behälter 15 von der Stellfläche 3 verhindern. Die Ränder 45, 46 bilden eine Fortsetzung der Ränder 39 der Tischfläche 13 des Transfertisches 8 und dienen damit gleichzeitig als Laufschienen für die Rollen 38 des Rahmens 14. Um zu verhindern, daß die Behälter 15 während des Gefriertrocknungsprozesses im Bereich der Beladeseite von den Stellflächen 3 herunterfallen, kann eine nicht dargestellte, jalousieartig ausgebildete Verriegelung vorgesehen sein, die nach der Beschikkung der Stellflächen vordere Ränder bildet. Bei einer besonders zweckmäßigen Lösung sind die Stellflächen 3 derart geneigt angeordnet, daß sich die Behälter 15 an dem der Ladekante abgewandten Rand 47 (Figur 6a) abstützen. Eine in dieser Weise geneigt angeordnete Stellfläche ist in Figur 1 eingezeichnet und mit 3′ bezeichnet. Die Unterbringung einer mechanischen Verriegelungseinrichtung in der Gefriertrocknungskammer 2 ist dann nicht erforderlich.

Figur 7 zeigt den Chargierwagen 9 mit dem Transfertisch 8 vor einem System 48, das dem Abtransport der verschlossenen Behälter 15 dient. Der korrekten Position dienen wieder der Bolzen 33 und die Bolzenführung 49.

Das Transportsystem 48 weist einen Entladebereich mit einer Vielzahl von Bändern 51 gleicher Laufrichtung (Pfeile 52) auf. Durch Führungen 53, 54 ist der Entladebereich begrenzt. Die schräg verlaufende Führung 54 bewirkt, daß die Behälter 15 nach und nach auf das Band 55 gelangen, das eine den Bändern 51 entgegengesetzte Laufrichtung hat. Mit Hilfe dieses Bandes erfolgt der Transport der geschlossenen Behälter 15 zu einer nicht dargestellten Verpackungsstation.

Figur 8 zeigt eine Ausführungsform mit einer Mehrzahl übereinander angeordneter Transfertische 8. Die Anzahl und der Abstand der Transfertische 8 entsprechen der Anzahl und dem Abstand der Stellflächen 3 in der Gefriertrocknungseinrichtung 1. Die Transfertische stützen sich in einem Gestell 57 ab, das seinerseits vom Chargierwagen 9 getragen wird. Das Gestell 57 ist horizontal verschiebbar, so daß sämtliche Transfertische 8 gemeinsam an die Stellflächen 3 angefahren werden können. Im einzelnen nicht dargestellte Bolzen und Bolzenführungen können wieder dazu dienen, daß die Stellflächen 3 und die Tischflächen 13 der Transfertische 8 korrekte Positionen zueinander einnehmen.

Die Beschickung der Gefriertrocknungseinrichtung 1 erfolgt, indem zunächst in der zu den Figuren 3 bis 5 beschriebenen Weise die Behälter mit dem zu gefriertrocknenden Produkt über das Band 25 zugeführt und auf dem Formatiertisch 26 auf Stellflächengröße formatiert werden. Der Formatiertisch ist auf die Höhe der einzelnen Tischflächen 13 der Transfertische 8 einstellbar, so daß jeweils mit Hilfe der Rahmen 14 die Behälter 15 auf die Tischflächen 13 geschoben werden können. Danach werden die Transfertische 8 gemeinsam an die Stellflächen 3 angefahren. Die Beschickung der Stellflächen 3 erfolgt in der zu den Figuren 6a bis 6c beschriebenen Weise. Wenn nur ein Antrieb für alle Rahmen 14 vorgesehen ist, erfolgt die Beschickung aller Stellflächen 3 gleichzeitig.

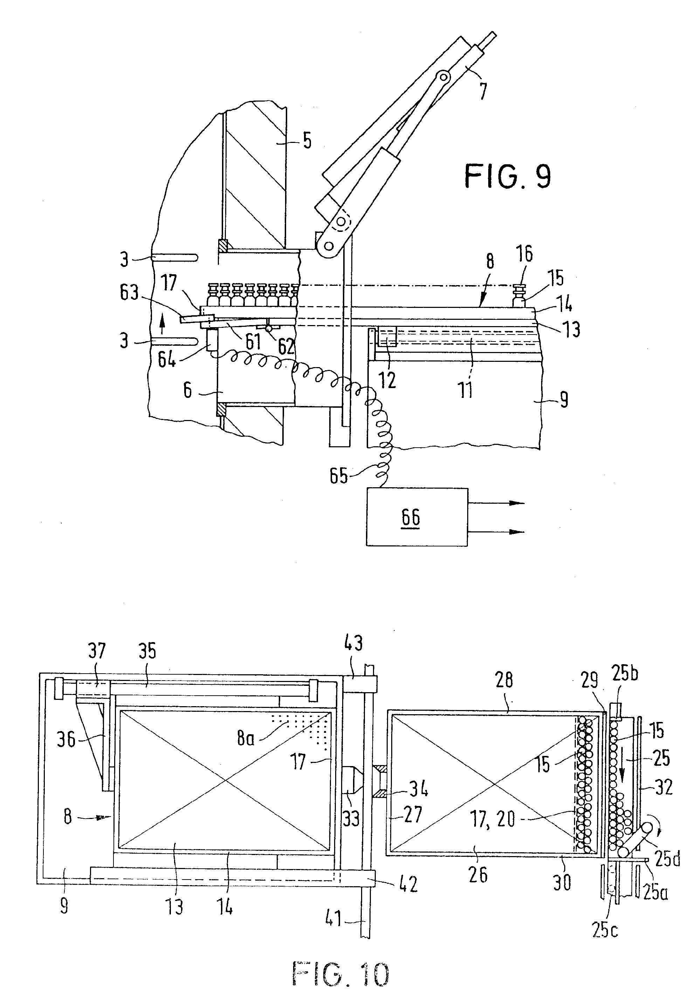

Für einen störungsfreien Übergang der Behälter 15 vom Formatiertisch 26 zum Transfertisch 8 und von diesem zu den Stellflächen 3 (und umgekehrt) ist es erforderlich, daß die jeweils benachbarten Flächen eine Ebene bilden. Um dieses zu erreichen, ist es zweckmäßig, wenn gemäß Figur 9 die Tischfläche 13 des Transfertisches 8 einen (oder zwei) der jeweils zu be- oder entladenden Tisch- bzw. Stellfläche (3, 26) zugewandten Abschnitt 61 aufweist, der am Hauptabschnitt der Tischfläche 13 über ein Gelenk 62 derart befestigt ist, daß die Höhe der freien Kante des Abschnittes 61 veränderbar ist. Am Abschnitt 61 sind Anschläge 63 befestigt, die die Position der Oberfläche des Transfertisches 8 definieren. Die Anschläge 63 sind derart seitlich am Abschnitt 61 befestigt, daß sie den Übergang der Behälter nicht stören.

Die Figur 9 zeigt weiterhin, daß dem neigbaren Abschnitt 61 der Tischfläche 13 ein ortsfest angeordneter Näherungsschalter 64 derart zugeordnet ist, daß der Abschnitt 61 in seiner tiefsten Stellung dem Näherungsschalter 64 aufliegt. Die Neigung des Abschnittes 61 ist dann immer noch so gering, daß ein Kippen der Behälter 15 nicht zu befürchten ist. Der Näherungsschalter 64 steht über die Leitung 65 mit einem Versorgungs- und Steuerblock 66 in Verbindung. Mit Hilfe dieses Steuerblockes 16 kann entweder die Aufwärtsbewegung der Stellflächen 3 mittels der Zylinder-Kolben-Einrichtung 4 (Figur 1) oder die Abwärtsbewegung des Transfertisches 8 beeinflußt werden.

Um eine zu be- oder entladende Stellfläche 3 mit dem Transfertisch 8 in eine Ebene zu bringen, werden entweder die Stellfläche 3 nach oben oder der Transfertisch 8 nach unten gefahren, so daß sich der Anschlag 63 auf die Stellfläche 3 auflegt. Eine Fortsetzung dieser Bewegung bewirkt, daß sich der Abschnitt 61 vom Näherungsschalter 64 abhebt. Dadurch wird ein Signal erzeugt, mit dem die Bewegung gestoppt wird. Die Stellfläche 3 und die Abschnitte 13, 61 des Transfertisches 8 bilden dann eine Fläche, auf der die Behälter 15 störungsfrei verschoben werden können.

Figur 10 zeigt eine der Figur 3 entsprechende Draufsicht auf Formatiertisch 26 und Transfertisch 8. Unterschiedlich gegenüber Figur 3 ist das Zuführungs- und Abtransportsystem für die Behälter 15. Es umfaßt ebenfalls das Transportband 25, das etwas breiter (ca. dreifacher Durchmesser der Behälter 15) ausgebildet und im Bereich der Stirnseite des Formatiertisches angeordnet ist. Die Führungsschiene 32 ist wieder in seitlicher Richtung verschiebbar. Sie nimmt die dargestellte Position während des Abtransportes der Behälter 15 ein. Während der Zuführung der Behälter 15 nimmt sie die Stellungen ein, die in den Figuren 4a bis c dargestellt und dazu beschrieben sind.

Während der Phase des Abtransportes der Behälter 15 (Zuführung zu einer Kapsel- und/oder einer Etikettiermaschine) werden die Behälter 15 mit Hilfe der Stauschiene 20 oder des Rahmens 14 (Rand 17) in Richtung Band 25 verschoben. Dieses Band nimmt die Behälter 15 mehrreihig auf und führt sie einem Abschnitt 25c zu, den die Behälter 15 nur einreihig passieren können. Um eine Verblockung der Behälter 15 vor dem Eintritt in die Engstelle 25c zu verhindern, ist eine aus einem Band 25d bestehende Führung vorgesehen. Der als Führung dienende Abschnitt des Bandes 25d ist schräg zur Bewegungsrichtung des Bandes 25 angeordnet und bewegt sich in einer Richtung, die auf die Seitenwandungen der Behälter 15 eine der Bewegungsrichtung des Bandes 25 etwa entgegengerichtete Kraft ausübt (vgl. den eingezeichneten Pfeil). Daraus resultiert eine Rotation der mit dem Band 25d in Berührung kommenden Behälter 15, so daß sperrige Blockbildungen sicher verhindert werden können.

Die zu gefriertrocknenden Produkte sind häufig temperaturempfindlich. Es ist deshalb zweckmäßig, ihre Standzeit durch Kühlung zu verlängern. Um dieses zu erreichen, können sowohl der Formatiertisch 26 als auch der Transfertisch 8 kühlbar ausgebildet sein. Dieses Ziel kann durch im einzelnen nicht dargestellte, von einem Kühlmedium durchströmte Kühlkanäle erreicht werden, die z. B. entweder in Form von Kühlschlangen auf die Unterseite der Tische 8 und 26 aufgeschweißt sind oder in den Tischflächen integriert sind.

Die in den Figuren dargestellten und beschriebenen Vorrichtungen können mit Steuerungen ausgerüstet werden, die einen teil- oder vollautomatischen Ablauf sowohl der Beschickung als auch der Entladung von Gefriertrocknungseinrichtungen ermöglichen. Positionsmeldungen können beispielsweise über Initiatoren, Füllstände über Lichtschranken abgefragt werden. Arbeitsprogramme oder Teilabläufe können an einem Steuerpult vorgewählt werden.

**Patentansprüche**

1. Gefriertrocknungseinrichtung (1) mit einer Kammer (2), in der sich mindestens eine Stellfläche (3) für Behälter (15) mit gefrierzutrocknendem Produkt befindet, mit einer Zuführungseinrichtung (25) für die Behälter (15), mit einem Transportsystem (25, 48) zum Abtransport der Behälter (15) sowie mit einem Transfertisch (8) zur Überführung der Behälter (15) von der Zuführungseinrichtung (25) zu den Stellflächen (3) der Gefriertrocknungskammer (2) und - nach Durchführung der Gefriertrocknung - von den Stellflächen (3) zum Transportsystem (25, 48), wobei der Transfertisch (8) verstellbar ausgebildet ist, so daß er an die Stellflächen (3) derart angefahren werden kann, daß seine Tischfläche (13) und die jeweilige Oberfläche der Stellfläche (3) im wesentlichen eine Ebene bilden, dadurch gekennzeichnet, daß der Transfertisch (8) mit einem relativ zur Tischfläche (13) bewegbaren, der Verschiebung der zu übergebenden oder zu übernehmenden Behälter (15) dienenden rahmenförmigen Schieber (14) ausgerüstet ist und daß mindestens ein stirnseitiger Rand (17, 19) des rahmenförmigen Schiebers (14) anhebbar ist.

2. Vorrichtung nach Anspruch 1, dadurch gekennzeichnet, daß zur relativen Verschiebung des rahmenförmigen Schiebers (14) gegenüber der Tischfläche (13) eine Spindelführung (35, 37) vorgesehen ist.

3. Vorrichtung nach Anspruch 1 oder 2, dadurch gekennzeichnet, daß der rahmenförmige Schieber (14) Rechteckform hat und daß zwei einander gegenüberliegende Ränder (17, 19) anhebbar sind.

4. Vorrichtung nach einem der Ansprüche 1 bis 3, dadurch gekennzeichnet, daß sich der Transfertisch (8) über eine Spindelführung (11, 12) auf einem Chargierwagen (9) abstützt.

5. Vorrichtung nach einem der Ansprüche 1 bis 4, dadurch gekennzeichnet, daß der rahmenförmige Schieber (14) mit Rollen (38) ausgerüstet ist.

6. Vorrichtung nach einem der Ansprüche 1 bis 5, dadurch gekennzeichnet, daß ein Formatiertisch (26) mit einem der Zu- oder Abführung der Behälter (15) diendenden Band (25) und Mittel (28, 32 und 25a bis 25d) zur Übergabe der Behälter (15) vom Band (25) auf den Formatiertisch (26) oder umgekehrt vorgesehen sind.

7. Vorrichtung nach Anspruch 6, dadurch gekennzeichnet, daß die Übergabemittel einen verschiebbaren Anschlag (25b) für die sich auf dem Band (25) aufstauenden Behälter (15) aufweisen.

8. Vorrichtung nach Anspruch 6 oder 7, dadurch gekennzeichnet, daß eine die abzutransportierenden Behälter (15) von einem mehrreihigen Abschnitt in einem Engpaß lenkende, von einem Band (25d) gebildete Führung vorgesehen ist, welche derart schräg zum Band (25) angeordnet ist, daß sie auf die Seitenwandungen der Behälter (15) eine der Bewegungsrichtung des Bandes (25) etwa entgegengerichtete Kraft ausübt.

9. Vorrichtung nach einem der Ansprüche 6 bis 8, dadurch gekennzeichnet, daß der Formatiertisch (26), die Gefriertrocknungseinrichtung (1) sowie ein System (48) zum Abtransport der geschlossenen Behälter (15) nebeneinander angeordnet sind und daß der Transfertisch (8) vor diesen Einrichtungen (26, 1, 48) seitlich bewegbar angeordnet ist.

10. Vorrichtung nach einem der Ansprüche 1 bis 9, dadurch gekennzeichnet, daß zur Sicherung der richtigen Position des Transfertisches (8) vor der zu beschickenden oder zu entladenden Einrichtung (3, 26, 1, 48) Bolzen (22, 33) und zugehörige Bolzenführungen (23, 34, 44, 45, 49) vorgesehen sind.

11. Vorrichtung nach einem der Ansprüche 5-10, dadurch gekennzeichnet, daß den Rollen (38) des rahmenförmigen Schiebers (14) Schienen (28, 39, 45, 46) zugeordnet sind.

12. Vorrichtung nach einem der Ansprüche 1 bis 11, dadurch gekennzeichnet, daß zumindest ein Teil der Oberflächen der Bauteile, die mit den Behältern (15) in Kontakt geraten, mit einer Kunststoffbeschichtung ausgerüstet sind.

13. Vorrichtung nach einem der Ansprüche 1 bis 12, dadurch gekennzeichnet, daß die Tischfläche (13) des Transfertisches (8) mit Bohrungen (8a) zur Einführung eines Inertgases ausgerüstet ist.

14. Vorrichtung nach einem der Ansprüche 1 bis 13, dadurch gekennzeichnet, daß die Stellflächen (3) nach hinten (von der Belädekante weg) geneigt angeordnet sind oder daß den Beladekanten eine Verriegelungseinrichtung zugeordnet ist.

15. Vorrichtung nach einem der Ansprüche 1 bis 14, dadurch gekennzeichnet, daß die Tischfläche (13) des Transfetisches (8) einen, der jeweils zu be- oder entladenden Stell- oder Tischfläche (3 oder 26) zugewandten Abschnitt (61) aufweist, der am Hauptabschnitt der Tischfläche (13) gelenkartig befestigt ist.

16. Vorrichtung nach Anspruch 15, dadurch gekennzeichnet, daß der Abschnitt (61) mit mindestens einem Anschlag zur Auflage auf die zu be- oder entladende Stell- oder Tischfläche (3 oder 26) ausgerüstet ist und daß ihm ein ortsfester Näherungsschalter (64) zugeordnet ist.

17. Vorrichtung nach einem der Ansprüche 5 bis 21, dadurch gekennzeichnet, daß mehrere übereinander angeordnete Transfertische (8) vorgesehen sind.

18. Vorrichtung nach Anspruch 17, dadurch gekennzeichnet, daß für die Transfertische (8) und/oder für die zugehörigen rahmenförmigen Schiebers (14) jeweils ein gemeinsamer Antrieb (Spindelantrieb) vorgesehen ist.

19. Vorrichtung nach Anspruch 17 oder 18, <u>dadurch gekennzeichnet</u>, daß der Formatiertisch (26) höhenverstellbar ist.

20. Vorrichtung nach einem der Ansprüche 1 bis 19, <u>dadurch gekennzeichnet</u>, daß der Formatiertisch (26) und/oder der Transfertisch (8) gekühlt ist-/sind, so daß sie während des Beschickens und-/oder während des Entladens der Stellflächen auf einem wenige Grade unter dem Nullpunkt liegenden Temperaturwert (z.B. -5° C) gehalten werden können.

**Claims**

1. A freeze-drying device (1) with a chamber (2) in which there is at least one placement area (3) for containers (15) with product to be freeze-dried , with a feeding device (25) for the containers (15), with a transport system (25, 28) for delivering the containers (15) and with a transfer table (8) for conveying the containers (15) from the feeder device (25) to the placement areas (3) of the freeze-drying chamber (2), and - after carrying out the freeze-drying - from the placement areas (3) to the transport system (25, 48), wherein the transfer table (8) is formed so that it is adjustable, so that it can be moved against the placement areas (3) in such a way that its table area (13) and each region of the placement area (3) substantially form one plane, characterised in that the transfer table (8) is fitted with a frame-shaped slide (14) which is movable in relation to the table area (13) and serves for the displacement of the containers (15) to be delivered or transferred, and that at least one end face edge (17, 19) of the frame-shaped slide (14) can be raised.

2. A device according to Claim 1, characterised in that a spindle guide (35, 37) is provided for the relative displacement of the frame-shaped slide (14) in relation to the table area (13).

3. A device according to Claims 1 or 2, characterised in that the frame-shaped slide (14) is rectangular in shape and that two opposite edges (17, 19) can be raised.

4. A device according to any one of Claims 1 to 3, characterised in that the transfer table (8) is supported on a charging wagon (9) by means of a spindle guide (11, 12).

5. A device according to any one of Claims 1 to 4, characterised in that the frame-shaped slide (14) is fitted with rollers (38).

6. A device according to any one of Claims 1 to 5, characterised in that a formatting table (26) is provided, with a belt (25) serving for the feeding or removal of the containers (15) and means (28, 32 and 25a to 25d) of transferring the containers (15) from the belt (25) on to the formatting table (26) or vice versa.

7. A device according to Claim 6, characterised in that the transfer means have a movable stop (25b) for the containers (15) accumulating on the belt (25).

8. A device according to Claims 6 or 7, characterised in that a guide is provided, which is formed from a belt (25d) which guides the containers (15) which are to be delivered from a multiple-row section in a bottleneck, which guide is disposed obliquely to the belt (25) in such a way that it exerts a force on the sidewalls of the containers (15) which is approximately opposite to the direction of movement of the belt (25).

9. A device according to any one of Claims 6 to 8, characterised in that the formatting table (26), the freeze-drying device (1) and a system (48) for delivering the closed containers (15) are disposed side by side, and that the transfer table (8) is disposed in front of these devices (26, 1, 48) so that it can move laterally.

10. A device according to any one of Claims 1 to 9, characterised in that studs (22, 33) and associated stud guides (23, 34, 44, 45, 49) are provided, to ensure the correct position of the transfer table (8) in front of the device (3, 26, 1, 48) to be charged or unloaded.

11. A device according to any one of Claims 5 to 10, characterised in that rails (28, 39, 45, 46) are associated with the rollers (38) of the frame-shaped slide (14).

12. A device according to any one of Claims 1 to 11, characterised in that at least a part of the surfaces of the components which come into contact with the containers (15) is provided with a plastic coating.

13. A device according to any one of Claims 1 to 12, characterised in that the table area (13) of the transfer table (8) is equipped with holes (8a) for the introduction of an inert gas.

14. A device according to any one of Claims 1 to 13, characterised in that the placement areas (3) are disposed sloping backwards (away from the loading edge) or that a locking device is associated with the loading edges.

15. A device according to any one of Claims 1 to 14, characterised in that the table area (13) of the transfer table (8) has a section (61) which faces each placement area or table area to be loaded or unloaded, which section is fastened by an articulated joint to the main section of the table area (13).

16. A device according to Claim 15, characterised in that the section (61) is fitted with at least one stop for support on the placement or table area to be loaded or unloaded (3 or 26) and that a fixed proximity switch (64) is associated with this stop.

17. A device according to any one of Claims 5 to 21, characterised in that several transfer tables (8) are provided, arranged on top of each other.

18. A device according to Claim 17, characterised in that a common drive (spindle drive) is provided for each of the transfer tables (8) and/or for each of the associated frame-shaped slides (14).

19. A device according to Claims 17 or 18, characterised in that the formatting table (26) is height adjustable.

20. A device according to any one of Claims 1 to 19, characterised in that the formatting table (26) and/or the transfer table (8) are cooled so that they can be maintained at a temperature a few degrees below zero (e.g. -5°C) during the charging and/or during the unloading of the placement areas.

**Revendications**

1. Dispositif de lyophilisation (1) comprenant une chambre (2) dans laquelle se trouve au moins une aire de stockage (3) pour des récipients (15) contenant un produit à lyophiliser, un dispositif d'amenée (25) des récipients (15), un système de transport (25,48) pour l'évacuation des récipients (15), ainsi qu'une table de transfert (8) pour le transfert des récipients (15) à partir du dispositif d'amenée (25) aux aires de stockage (3) de la chambre de lyophilisation (2) et, -après exécution de la lyophilisation-, à partir des aires de stockage (3) au système de transport (25,48), la table de transfert (8) étant réglable, afin de pouvoir être approchée des aires de stockage (3) de telle sorte que sa surface de table (13) et chacune des surfaces respectives des aires de stockage (3) constituent sensiblement un plan, caractérisé en ce que la table de transfert (8) est munie d'un organe coulissant en forme de cadre (14) qui sert au déplacement des récipients (15) à transmettre ou à reprendre et est mobile par rapport à la surface de table (13), et en ce qu'au moins un bord frontal (17, 19) de l'organe coulissant en forme de cadre (14) est susceptible d'être soulevé.

2. Dispositif selon la revendication 1, caractérisé en ce qu'un guide à broches (35,37) est prévu pour le déplacement de l'organe coulissant en forme de cadre (14) relativement à la surface de table (13).

3. Dispositif selon la revendication 1 ou 2, caractérisé en ce que l'organe coulissant en forme de cadre (14) a une forme de rectangle et en ce que deux bords en vis-à-vis (17,19) sont susceptibles d'être soulevés.

4. Dispositif selon l'une des revendications 1 à 3, caractérisé en ce que la table de transfert (8) s'appuie par l'intermédiaire d'un guide à broches (11,12) sur un chariot de chargement (9).

5. Dispositif selon l'une des revendications 1 à 4, caractérisé en ce que l'organe coulissant en forme de cadre (14) est muni de roulettes (38).

6. Dispositif selon l'une des revendications 1 à 5, caractérisé en ce que sont prévus une table de mise en forme (26) comprenant une bande (25) pour l'amenée ou l'évacuation des récipients (15), et des moyens (28,32 et 25a à 25d) pour le transbordement des récipients (15) de la bande (25) vers la table de mise en forme (26) ou inversement.

7. Dispositif selon la revendication 6, caractérisé en ce que les moyens de transbordement présentent une butée déplaçable (25b) pour les récipients (15) qui s'accumulent sur la bande (25).

8. Dispositif selon l'une des revendications 6 et 7, caractérisé en ce qu'il est prévu un guide formé d'une bande (25d) et dirigeant les récipients (15) à évacuer d'un tronçon à plusieurs rangées de récipients vers un rétrécissement, cette bande-guide (25d) étant disposée de biais par rapport à la bande 25, de telle sorte qu'elle exerce sur les parois latérales des récipients (15) une force dirigée de façon sensiblement contraire à la direction du mouvement de la bande (25).

9. Dispositif selon l'une des revendications 6 à 8, caractérisé en ce que sont disposés côte à côte la table de mise en forme (26), le dispositif de lyophilisation (1), ainsi qu'un système (48) d'évacuation des récipients (15) fermés, et en ce que la table de transfert (8) est disposée mobile latéralement devant ces dispositifs (26,1,48).

10. Dispositif selon l'une des revendications 1 à 9, caractérisé en ce que des goujons (22,23) et des guides de goujon correspondants (23,34,44,45, 49) sont prévus afin d'assurer la position adéquate de la table de transfert (8) devant le dispositif à charger ou à décharger (3,26,1,48).

11. Dispositif selon l'une des revendications 5 à 10, caractérisé en ce que des rails (28, 39,45,46) sont associés aux roulettes (38) de l'organe coulissant en forme de cadre (14).

12. Dispositif selon l'une des revendications 1 à 11, caractérisé en ce qu'une partie au moins des surfaces des éléments qui entrent en contact avec les récipients (15) sont munis d'un revêtement en matière plastique.

13. Dispositif selon l'une des revendications 1 à 12, caractérisé en ce que la surface de table (13) de la table de transfert (8) est munie de perçages (8a) pour l'introduction d'un gaz inerte.

14. Dispositif selon l'une des revendications 1 à 13, caractérisé en ce que les aires de stockage (3) sont disposées inclinées vers l'arrière (en s'éloignant du bord de chargement) ou en ce que le bord de chargement est muni d'un dispositif de verrouillage.

15. Dispositif selon l'une des revendications 1 à 14, caractérisé en ce que la surface de table (13) de la table de transfert (8) présente une partie (61) qui est tournée vers l'aire de stockage ou la surface de la table de mise en forme (3 ou 26) à charger ou décharger respectivement, et qui est fixée de manière articulée à la partie principale de la surface de table (13).

16. Dispositif selon la revendication 15, caractérisé en ce que la partie (61) est munie d'au moins une butée pour l'appui sur l'aire de stockage ou la surface de la table de mise en forme (3 ou 26) à charger ou décharger, et en ce qu'elle est associée à un détecteur de proximité (64) à poste fixe.

17. Dispositif selon l'une des revendications 5 à 21, caractérisé en ce qu'il comprend plusieurs tables de transfert (8) disposées les unes au dessus des autres.

18. Dispositif selon la revendication 17, caractérisé en ce qu'une commande (commande à broches) commune est prévue pour chacune des tables de transfert (8) et/ou pour chacun des organes coulissants en forme de cadre (14) correspondants.

19. Dispositif selon l'une des revendications 17 et 18, caractérisé en ce que la table de mise en forme (26) est réglable en hauteur.

20. Dispositif selon l'une des revendications 1 à 19, caractérisé en ce que la table de mise en forme (26) et/ou la table de transfert (8) est/sont refroidies, de telle sorte qu'elles puissent être maintenues, pendant le chargement et/ou le déchargement des aires de stockage, à une température située à peu de degrés au-dessous de 0°C (par exemple -5°C).

FIG.1

FIG.2

FIG.3

FIG.4a

FIG.5a

FIG.6

FIG.7

FIG.8

EP 0 391 208 B1

FIG. 9

FIG. 10